# EUROPEAN PATENT APPLICATION

(11) **EP 3 082 053 A2**
(43) Date of publication of application: **19.10.2016**
(21) Application number: 16001734.9
(22) Date of filing: 04.08.2016
(51) Int. Cl.: G06F 17/30

(54) **TRAFFIC DISTRIBUTION AND CLICK VALIDATION SYSTEM**

(71) Applicant: Clickky Group Ltd., Wan Chai, Hong Kong 852 (CN)
(72) Inventor: Rogovskyi, Vadym, 65082 Odessa (UA)
(74) Representative: Schmidt, Steffen J.

(57) **Abstract**

The system and method of the present invention provide a complete solution that includes a Dynamic Content Plugin, that operates at the client device, analytical and statistical functionality implemented at the Server side, interaction with the tracking systems of the content source servers. The content is being generated individually for each requesting client in accordance with the client preferences, using predictive formatting for each end user. Therefore, the presentation of the content may differ for each user. In addition to dynamically generating content to be displayed to the user, the present solution includes Traffic Distribution System for re-distribution of invalid clicks.

## Description

### Technical field

The present solution relates to computer systems and methods for optimization of traffic distribution while providing digital content over a digital data network such as the world wide web.

### Background

In the past decades there has been a significant increase in the amount of digital information that is being generated, stored and served to end users over a world wide web. The end users access web with a variety of computing devices, such as, but not limited to, mobile phones, tablets and notebooks where available resources, such as memory and bandwidth may be limited. Digital content and in particular software applications for mobile devices are being developed for wide variety of purposes and downloaded by end users on their mobile devices. While the resources of the mobile computing devices are limited, the capacity of the web servers distributing such content and therefore accessed by said devices is limited as well. The volume of information that is being transferred over the networks and served to customers poses a technical problem of optimization of the data being transmitted and minimizing amount of traffic.

In many cases it is the goal of the companies distributing digital content that only relevant end users would access the content. For example, there is no point for a software manufacturer if a user that does not in fact need the software would download a trial out of curiosity and never buys a full version. Nor there is a point to pay to a software distributor for marketing said content to such a client. One of the approaches taken in order to avoid such situations is user profiling.

User profiling has been known in the art and has been used for customizing the content provided to a client. For example, one prior art document WO2015195671 discloses a method for selecting relevant information for display on a display screen of a mobile computing device by comparing a listing of past user activities and preferences to a stored informational content according to a detected proximity to a geographical location. The relevant content may be selected according to additional parameters, including a stored predetermined activity category, a stored geographical location of a creator of the informational content, and a time period at which the mobile device is determined to be proximal to the geographical location.

Another prior art document US2015379411 (A1) discloses a model of preferences that displays certain types of time and history dependent dynamics. Creation and use of the model based on insights from studies in human psychology and gained from the exploration of real world temporal preference data. Particularly, the dynamics of satiation for familiar content are incorporated in the model by dynamic item preference states. In some examples, the model may identify different latent preference states for items, which are called the Sensitization, the Boredom, and the Recurrence states. Dynamics in a user's preferences for items may be attributed to the dynamics in these item states.

Yet another prior art example US2015371274 (A1) provides an online advertisement system targeted to a publication medium (e.g., a website) based on a location of a user visiting the website, the content of the website and/or a location associated with the website content. Static and/or dynamic maps can be presented with the targeted advertisements on the website. The targeted advertisements can include a click-to-call link and/or other features for allowing a user to interact with and explore the targeted advertisement.

While the companies producing media content face the problem of delivering the right content to the right customers, in some cases it is not possible to deliver the content only to the targeted group. In many cases the system just does not have enough information on the person at the time some content is already being shown. If such a non-target person interacts with the content, it may lead to unnecessary traffic and burden to the server providing the content. Additionally, content providers would like to increase attractiveness of their content for the target auditory.

### Summary

The present solution relates to a computer implemented method for optimization of traffic distribution between content providers and content consumers while providing digital content over a digital data network including:
providing a first computer resource comprising a media content generating system configured to generate media content for an at least one second computer resource, said first and second computer resources being adapted and configured to communicate with each other at least temporarily via a network, and wherein said second computer resource is operated by an en user; determining, in the first computer resource, technical parameters and/or the end user parameters of the second computer resource; determining subset of media content entities for which the technical parameters and/or end user parameters satisfy selection criteria for the second computer resource and the end user; ranking media content based upon a probability that content is relevant to the end user; selecting a highest ranked media content entity and dynamically adapting formatting said media content in accordance with said determined parameters of the second computer resource and preferences of the end user, embedding said selected media content entity into said dynamic content plugin; and providing said selected media content entity embedded into a dynamic plugin to said second computer resource.

The present solution may further comprise a content predictive formatting adapted to
(a1) retrieve from the second computer resource as technical parameters data regarding at least a supported language, device type, device model, device manufacturer, operation system and version of the operation system of said second computer resource, User Agent and IP address to make the request from the second to the first computer resource for the media content with such end user parameters; and/or
(a2) retrieve from the second computer resource as end-user information data regarding browser cookies, software usage, browsing history, geographical user location, IP address;
(b) create a behavioral user profile based on the retrieved information; and
(c) select dynamic content for the dynamic content plugin based upon the behavioral user profile.

The present solution may further include a Traffic Distribution System, TDS which redirects clicks of a non-target user to the media content for which such a non-target user will be target audience, wherein the end user is determined to be non-target user if determined parameters of the end user do not satisfy conditions set forth for the media content.

The present solution may further include tracking user activity relative to each media content entity loaded to the second computer resource, including validating end user actions and communicating said validation results to the database for further processing.

The present solution may further comprise accessing a web site from the second computer resource further comprising;
determining access parameters such as operation system of the second computer resource, connection parameters such as network type (WLan, LTE, 3G, EDGE, or the like), geographical location, a browser software, device make and model; and/or parsing collected content data fields to determine properties of the second computer resource, including various parameters of the device, the operation system type, manufacturer, version, the type of the device itself (i.e. phone, tablet, notebook etc.), the manufacturer of the device and device model; identifying a unique user ID of the end user, if such user has accessed DCP before if a user record with the end user ID already exists in the database, then the information is appended to the identified user record in the database, or creating a new user record in the database and appending the information to the user record, and providing the initial media content to the end user based upon information retrieved from the parsing.

The present solution may further include accessing a web site from the second computer resource further comprising: appending the database user record each time there is any interaction of the end user with DCP with information related to said interaction, including at least one of a click, viewing of a media content proceeding to a link, downloading data or a computer program.

The present solution may further include functionality, wherein an event of interaction, such as click is set to a valid or an invalid state, wherein, if the end user is not identified as a valid user, or a click is not identified as a valid click, the event will be recorded as invalid, and if the event is determined to be invalid, the TDS will be engaged.

The present solution may further include functionality, wherein at the first computer resource, available information on prior interaction events of the end user are retrieved from the database and analyzed, and at each interaction event user preferences and statistical information related to the second computer resource and the end user are generated, and statistics in the database for the determined end user are created or updated.

The present solution may further include functionality, wherein it is determined that media content entity that has been clicked and viewed the most by the end user, considering only valid clicks and actions, and wherein the most relevant content entity for the end user is identified, new content entity is offered to the end user based upon content characteristics including: Color scheme, Size, Language, Animation, Genre of content, Arrangement of the elements, Ratings, Images, Banner position, Banner format, and wherein determined user preferences are being used to optimize predictively format the content for a given end user in response to the determined end user preferences for said end user by a list of content entities available for the second computer resource based upon the determined user parameters and based upon the probability that the user will click at each of the selected content entities.

The present solution may further include functionality, wherein the content entity with a highest weight is selected and sent to a Media Content Generator for generating content for the determined content entity including the following elements: a graphical icon for the application, rating of the application, name of the application, description, cost indication, application banners for display, etc, and wherein the elements are selected and content is generated and predictively formatted by the Media Content Generator in accordance with the determined user preferences.

The present solution may further include functionality, wherein the generated and predictively formatted content is being sent to the DCP and displayed to the end user, and wherein each event of user interaction with the content provided by DCP is being detected, validated and recorded, and, if an event of interaction with the content is detected, the DCP sends a notification to the first computer resource.

To summarize, the present solution provides important advantages to content providers, distributors and end users. The end users only receive the content they are likely to be interested in. The content is being generated for the user in the way that is most likely to be attractive to that specific user. The content distributors can optimize traffic and minimize the number of useless requests. The present solution allows content providers to maximize usage of their content and receive information on valid and invalid events of interaction with their content.

### Brief description of the drawings

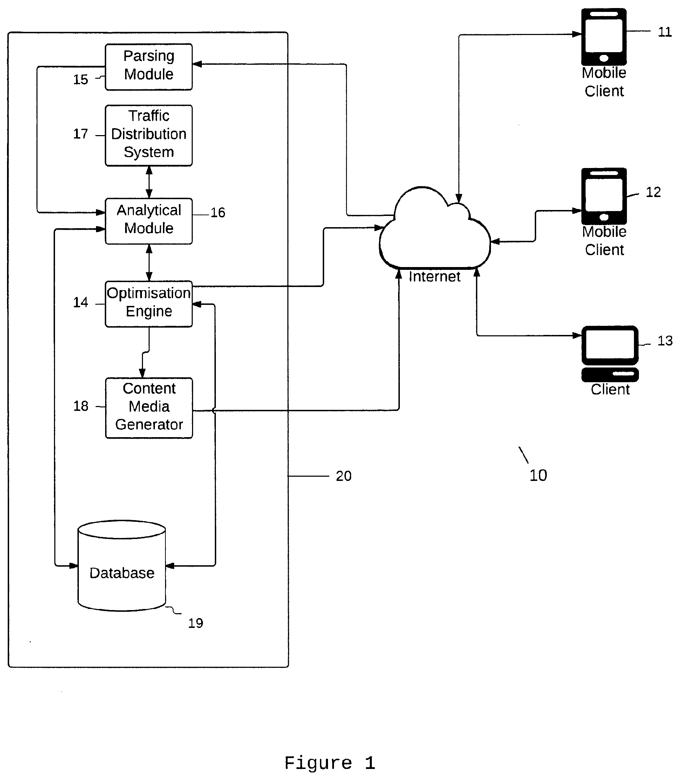

Figure 1 depicts a block diagram of the system of the traffic distribution and click validation system in accordance with the present solution.

### Detailed description

The technical problem addressed by the present solution is to provide a method and a system for dynamic content generation and display, traffic distribution and optimization that addresses the shortcomings of the prior art approaches described above. Another technical problem addressed by the method of the present application is to predictively format the most relevant for end user content in order to promote user interaction with the displayed content.

The present solution allows providers of the media content to offer the appropriate and most "interesting" content to the relevant target users in order to make sure that the user will actually interact with the provided content. It also provides the content providers and distributors with important statistics of how provided content has been used by the target users. The ultimate goal of any content provider is to provide the content to the target user auditory that will actually be utilized by the users, while at the same time limiting the number of empty traffic that does not lead to actual downloads and/or use of the provided content. The same can be said with respect to any content distributor that is providing references to such content at their web sites. Also, it is very important to the content provider, when content is provided to end users via distributors, to know what interaction events with their content entities have been performed by unique users of the target auditory, while disregarding the invalid interaction events that may be reported by the content distributors.

Another goal of the content provider is to make sure that the level of interaction with the content shown to the relevant user is as high as possible. The goal would be to predict the way the content should be formatted for a particular user and format it in the way that would most likely prompt the user for interaction with the content.

The system of the present solution, as shown on Figure 1, provides a complete solution that includes a Dynamic Content Plugin, hereinafter DCP, that operates at the client device, analytical and statistical functionality implemented at the Server side 20, interaction with the tracking systems of the content source servers. The content is being generated individually for each requesting client in accordance with the client preferences, using predictive formatting for each end user. Therefore, the presentation of the content may differ for each user. In addition to dynamically generating content to be displayed to the user, the present solution includes Traffic Distribution System 17, hereinafter TDS, for redistribution of invalid clicks.

The click will be considered as being invalid if determined user properties or user connection at the time of the click do not satisfy conditions specified by the content provider for the requested content. The examples of why a user and/or a click shall be considered invalid are set forth below.

The TDS 17 redirects invalid clicks of the non-target user to the content for which such a non-target user will be target audience. Therefore, not only the unwanted traffic is eliminated, but the non-target user transforms to a target user and being provided with the content that is relevant to him. Moreover, the system and method of the present solution provide functionality of tracking user activity for each loaded content entity, including validating user actions and recording said validation results to the database 19 for further processing. This would allow content producers and distributers to receive statistical information for their content. As it has been noted above, this information not only is crucially important for optimization of content distribution, but it is important for the content producers to track only valid interaction events that are being reported by the content distributors. Moreover, this information is used for determining user preferences for predictive content formatting. All of the above mentioned advantages are described below in detail.

The "user", as used herein, means any person accessing web site pages with installed DCP of solution the present solution via any personal devices that have access to the internet, such as, but not limited to mobile phones, tablet computers, notebook computers etc, herein the second computer resource, shown as devices 11, 12 and 13 on Figure 1. In one embodiment the "user" is uniquely identified by the device that is being used to access the dynamic content in accordance with the present solution.

The system 10 of the present solution, as shown on Figure 1, comprises the following high-level elements:
1. a Dynamic Content Plugin, operating at the user device, hereinafter a DCP,
2. a Server 20 or first computer resource, the following software modules:
   a. Optimization Engine 14,
   b. Parsing module 15,
   c. Analytical module 16,
   d. Traffic Distribution System module 17,
   e. Content Media Generator 18
3. a Database 19
4. a Tracking system at the content source server

The Database 19 stores information on the content items, data collected by DCP at the user device 11 - 13 or second computer resource (including various behavioral user information), content information and attributes, as well as results of statistical and analytical research, produced by the Analytical module 16 for each known user and content entity. The database 19 may store data in relational and non-relational format.

DCP is a web plugin that may be included into any web page and be accessed from any device that is connected to the internet. In accordance with the present invention, DCP may be included into a web-site page and loaded to a client device 11 when said website page is requested by the user. The DCP has two main functions to it. It collects the data of the user device and displays the dynamic content data that is being generated by the system of the present solution in accordance to the user preferences, as described in detail below.

Every time when DCP is loaded to a user device 11 - 13, it reads and processes all available cookies of the device. It also looks for cookies that may have been set by DCP before, if previously it has been loaded to this device. If cookies were found, DCP sends their values to the server. If no cookies previously set by DCP were found, then this device has not been used with DCP before, so DCP assigns the user a new unique ID, sets corresponding cookies so a new user is created in the database. If the cookie with the unique user ID is present, DCP will send this user ID to the server, so that the user can be identified by the system. DCP may also update existing cookies with up to date information. If there is available information on the content that has been used by the user outside DCP, this information is also collected. Third party providers may be used to collect additional information on the user, such as gender age etc.

Accordingly, DCP collects various information from the client device 11 - 13, including, but not limited to IP address, User Agent, Accept Language and cookies from HTTP header fields of the client device and sends said collected parameters to the Server, as will be described in detail below.

The collected information on the user is provided by DCP to the server side services, in particular the database record for the user is being created or updated and all new and historical user information is being passed to the Analytical module 16 to determine user preferences, as described in detail below.

For each user that is ever accessed any content via DCP there is a record in the database. The Database 19 includes information on every event of interaction of the user with the content. Based upon previously accessed content, user preferences are determined in real time, so each user record is provided with possible content types and qualities of the content that may be of interest to the user and will provoke interaction with the content, as it will described in detail below.

The Database 19 stores information for each content entity, being distributed via the system of the present invention. For each content entity, the content provider may specify specific rules that define target auditory by specifying specific combination of qualities and parameters of the target user for that specific content entity. The rules defined by the content provider are stored in the database in a form of list of properties and dependencies of the target user for the specific content item. For example for a user to be identified as a valid user for the content item, parameters such as country, internet connection type, device type, device model, operating system name, gender, age, content preferences and prior activity etc must match the corresponding parameters specified for the selected content entity.

The initial user information is being received from the request string when the user is requesting the web page with DCP incorporated therein.

### For example:

A user has accessed a web site from a portable device, using Android OS, uses 3G connection and located in China. Geographical location will be determined by IP address (this can be done using known in the industry methods). User Agent string is used to determine the browser (for example Mozilla/5.0 (Linux; Android 4.3; Nexus 7 Build/JWR66Y) AppleWebKit/537.36 (KHTML, like Gecko) Chrome/29.0.1547.72 Safari/537.36), device make and model, operation system of the device, and well as type of connection with internet.

The Parsing Module 15 is used to parse collected HTTP header fields to determine properties of the client device. Such properties may include various parameters of the device, the operation system type, manufacturer, version, the type of the device itself (i.e. phone, tablet, notebook etc.), the manufacturer of the device and device model.

The initial request string may also include a unique user ID, if such user has accessed DCP before. If the user already exists in the database, then the information is appended to the identified record in the database. Otherwise, the initial content is provided to the user based upon information retrieved from the request string by the parsing module. So a content entity having targeting on China, Android version 4.3, Nexus 7 would be selected. However, if the user has been matched with the existing user in the database, the content will be generated and presented to the user in accordance with the available user preferences that have been previously recorded for that user.

Certain known in the industry commercially available databases may be used for the purposes of storing content and user data. As a non-limiting example "Mongo" may be used to track events of interaction with the content and "Redis"can be used for user information. At least the following information can be stored for each event of interaction with the content:

**Table 1**

| **Field** | **Example Value** | **Description** |
|---|---|---|
| Gco | "RU" | Country of the location |
| Grg | "Bashkortostan" | Region of the country |
| Gci | "Ufa" | City |
| Gct | "3G" | Type of connection |
| Os | "iOS" | Operating system name |
| Osv | "8.1" | Operating system version |
| Mdl | "iPad" | Device model |
| Mnf | "Apple" | Device manufacturer |
| Typ | "tablet" | Device type |
| app_id | NumberLong(63071) | Internal product ID |
| Aid | NumberLong(1003630) | Internal content ID |
| Cpl | NumberLong(O) | Event type |
| dc | ISODate("2016-01-21T07:42:46.557Z") | Date of event |
| di | ISODate("2016-01-21T07:44:46.557Z") | Date of interaction |
| pid | NumberLong(1002657) | Web site unique ID |
| b | "Mozilla/5.0 (iPad; CPU OS 8_1_2 like Mac OS X) AppleWebKit/600.1.4 (KHTML, like Gecko) CriOS/47.0.2526.107 Mobile/12B440 Safari/600.1.4" | User Agent String |
| ips | "145.255.2.176" | IP Address |
| uuid | "87387174" | Unique user ID |
| is_unique | NumberLong(1) | Flag of uniqueness of the click (if a click is not unique, TDS will activate) |
| valid | True | Validness of the click (if click is not valid, TDS will activate) |
| ua_language | "RU" | Browser language |

At least the following information is being stored by in the database for each identified unique user:

**Table 2**

| **Field** | **Example Value** | **Description** |
|---|---|---|
| IdType | "udid" | Type of unique ID of a device or browser (udid acquired from cookies, idfa for iOS, gaid for Android) |
| IdValue | "33775490" | Value of the IdType |
| DataType | "fingerprint" | Type of data acquisition "Fingerprint" if only IP address and User Agent available, cookies if set, udi, idfa or gaid if available |
| OSName | "Android 4.3" | OS name and version |
| DeviceModel | "Nexus 7" | Device model |
| DeviceMake | "Google" | Device manufacturer |
| InteractedProduct | 127.0.0.1:6379[2]> smembers uu: user: 1498100:lead | ID of a product user interacted and IP address the user interacted with a product from |
| ContentID_IP | 127.0.0.1:6379[2]> zrange uu:user:6374735:clicks 0 - 1 | Content Id user clicked from a IP address |
| ProductID_IP | 127.0.0.1:6379[2]> smembers uu:leads:app:47179351 | Product Id user clicked from a IP address |

Every time there is any interaction of the user with DCP, the database record is being appended with the relevant information as set forth above. Every user action, such as click, viewing, proceeding to a link, downloading etc. is being recorded and validated. In particular, every event of interaction, such as click can be set to valid or invalid state. For example, if the user is not identified as a valid user, or a click is not identified as a valid click, the event will be recorded as invalid. If the event is determined to be invalid, the TDS will be engaged, as described in detail below.

The Analytical module 16 is software module located at the server site. It retrieves all available information on the prior user interactions from the database and analyzes said information. At each event, the Analytical module 16 may generate updated client preferences and statistical information for the client device and creates or updates statistics in the database for the determined unique user. It is noted that the user preferences are only calculated based upon valid events of user interaction with DCP. Invalid events are disregarded for these purposes.

The Analytical module 16 processes records as described in Table 1 and Table 2 to determine content that has been clicked and viewed the most by a user, considering only valid clicks and actions. When the most relevant or "interesting" content for the user is identified, new content can be offered to the user based upon one or more of the following content characteristics:➢
➢ Color scheme
➢ Size
➢ Language
➢ Animation
➢ Genre of content (games, business applications etc)
➢ Arrangement of the elements (games "tree in a row")
➢ Ratings
➢ Pictures (cats, dogs, weapons etc)
➢ Banner position
➢ Banner format
➢ E.t.c

For example, the Analytical module 16 may determine that the user likely clicks at the yellow color content of medium size, in English language and interested in in "tree in a row" games, or on the banner that has cats.

The determined user preferences are being passed to the Optimization engine 14. The Optimization Engine 14 is a software module located at the server site 20. The Optimization Engine 14 is used to optimize the content for a given user in response to the user preferences determined by the Analytical module 16 for said user. The Optimization Engine 14 receives a request for the available content for the user. In response to the request, Optimization engine 14 queries the database 19 to determine a list of content entities available for the client device based upon the determined user parameters, such as location and device information and preferences. The Optimization engine 14 determines the probability that the user will click at each of the selected content entities. The probability is determined based upon comparisons of the properties of the selected content entities with statistical information of the user's previous interactions with DCP. Each content entity assigned a relative weight.

The content entity with the highest weight is selected and sent to the Media Content Generator 18. In particular, the content entity may comprise a mobile software application, a game or link to a web site. The Content Media Generator 18 generates content for the determined content entity. The content includes the following elements: a graphical icon for the application (App Icon), rating of the application (App Rating), name of the application (App Name), description (App Description), cost indication (Free App), application banners for display (Banner Set), etc. The elements are selected and content is generated by the Media Content Generator 18 in accordance with the determined user preferences. The Media Content Generator 18 provides predictive formatting of the generated content in accordance with user preferences and statistics. Accordingly, for each user the same content entity may be presented in a different way, such that the user most likely would proceed with interacting with this content. This unique advantage of the present solution allows content providers to make sure that their content will get the highest utilization possible with relevant target auditory.

While in most cases (about 95%) the highest weight content will be used, in certain cases (about 5%) content entities that have no statistics associated to them may be provided to a user in order to get statistical information on those content items. Weight is assigned to the content items by the optimization engine based upon the performed prioritization of the content items for the specific user.

Once the content is generated it is being sent to the DCP and displayed to the user. Each event of user interaction with the content provided by DCP is being registered, validated and recorded. The following event types are being processed by the system:
➢ Viewing
➢ Clicks
➢ Download

Additionally, third party events, such as reviewing tutorial, passing a level in the downloaded game, using the downloaded software can be received from a third party provider and also processed by the system.

Once an event of interaction with the content is detected, the DCP sends a notification to the server 20. For example, upon the user has viewed the content, the information about the viewing of the content by the user is saved to the database 19 in the format including at least the fields specified in Table 1 and Table 2 for further analysis by the Analytical module 16.

If the user clicks at an icon or a link of the generated content within DCP, the DCP notifies the server 20 of event of redirect and forwards the user to the provider of the requested digital content (or application). For example, the request for content can look like the following:
"http://impressions.clickky.biz/ads-api v3?key=
984f4836bf45f83367f03dd4b507f5d8&format=json&cp.ict=WIFI&cp.d type=Smartphone&d
evicetype=1&cp.resolution=720x1280&tz=0.0&client0s=Android&osv=17&cp.model=HTC
Evo - 4.2.2 - API 17 - 720x1280&model=HTC Evo - 4.2.2 - API 17 - 720x1280&cp.
make=Genymotion&make=Genymotion&cp.carrier=Android&
clientIp=10.0.3.15&clientUa=Mozilla/5.0 (Linux; U; Android 4.2.2; en-us; HTC Evo - 4.2.2 -
API 17 - 720x1280 Build/JDQ39E) AppleWebKit/534.30 (KHTML, like Gecko) Version/4.0
Mobile Safari/534.30"

The request string will be parsed by the Parsing Module 15. The parsed information on the redirect will be saved to the database 19 in the format according to Table 1 for further analysis by the Analytical module 16. The user information is updated in accordance with Table 2. Every event of interaction is being registered by DCP and recorded to the database 19, and the user identification and validity check is also done at every event. The dynamic nature of the internet makes it important to keep checking the validity of user actions and uniqueness of the user at all times. This allows to keep database current and to gather the most accurate information for the content providers, since content providers only interested in valid events or actions performed by the unique users.

In case redirected user installs the application at his device, the source server of the application, such as iTunes Store, Google Play Store etc., provides information via third party tracking system. The information on download, installation, registration process and the like is being sent to the server, converted to the format corresponding to Table 1 and Table 2 and saved to the database 19. The saved information includes IFA for iOS applications, Google AID for Android applications etc.

In the case a user or click is deemed invalid at the time when content is already shown to the user, i.e. loaded to the user device, the Traffic Distribution System module 17 provides further important advantages to the digital content distributers and manufacturers. It provides traffic optimization and effectiveness increase.

While the system of the present invention attempts to validate the user at the early stage of interaction, it is not always possible. In certain cases the initial request for content does not return proper information to identify the user. For example, there may be parsing errors for the initial request data, or the data may be lost or corrupt.

Another example of detecting invalid user or click may relate to situations when certain content should be available to users having certain connection type. As it has been described above, the present system attempts to detect connection type (LTE, 3G, Wifi, etc) at the time of HTTP request, at the time the content is loaded to the user device, and at the time of the click. However, this information may not be available or correctly detected in all cases. The connection type is determined based upon IP address of the user, the IP address is being passed to a third party service and the connection type is being received in return. However, these third party services may not respond fast enough to make sure that the content targeted to users with certain connection type is shown only to such users. In some cases the connection type may not be properly detected prior to the content is loaded to user's device. However, the information on connection type may become available only at the time of click. In this case it would be determined that the user does not have the needed connection type after the content entity is already loaded to the device and the user has already clicked on it. In this case the click will be deemed to be invalid. Content may be designated to users having certain connection types because of technical limitations (for example heavier content may be limited to wifi traffic), or provider limitations.

The same is true with respect to the other user properties. If the content is already loaded or about to be loaded to the user device, if the DCP detects user parameters that are different from what was determined from parsing the initial request string and these detected parameters do not satisfy requirements set forth for the loaded content entity, the user and/or click will be invalidated by the system.

In some cases, content may be cached in memory on the user device and not refreshed automatically, so that at the time of the click the content entity would not be active. In some cases, it is possible that user parameters received with the initial request do not match with the parameters received at a later stage, when the DCA is already loaded. For example, the initial request may specify USA as a country of the requesting user, however, at subsequent check, the country may actually be determined as Canada. The requested content may be available for USA, but unavailable for Canada. However, the content may already be displayed to the user. In such cases any click on the content within DCP will be recorded as invalid. It is also possible that the user that have been initially identified as unique, is being determined at the time of the click as not unique, yet the content is already shown to such user. Furthermore, even if the user is unique, the action performed by the user may be invalid for shown content based upon further determined user properties. In such cases it is crucially important to handle each such invalid case and still show relevant content to the unique users.

In such cases, TDS 17 will use the Analytical module 16s to determine the most relevant content entity for the user, as described in detail above. The optimization engine 14 may provide the user with a link to an appropriate content page or the content media generator 18 will generate the content for the user in accordance with preferences, and will provide the user with relevant content instead of invalid. The new landing page prepared for the user will be generated in accordance with user preferences. For example, if the user prefers blue colored graphics and pictures of cats in the banners it will be generated to have such elements on the page.

To summarize, the present solution provides important advantages to content providers, distributors and end users. The end users only receive the content they are likely to be interested in. The content is being generated for the user in the way that is most likely to be attractive to that specific user. The content distributors can optimize traffic and minimize the number of useless requests. The present solution allows content providers to maximize usage of their content and receive information on valid and invalid events of interaction with their content. The technical problem of reducing and optimizing traffic is addressed by providing a method and a system for dynamic content generation and display, traffic distribution and optimization. The present method is advantageous, since it is limiting the traffic by providing only relevant content to the right users. Moreover, predictive formatting provides even further advantages in traffic optimization, since if the end user is more likely to interact with the loaded content, said user would less likely look for other similar content, thereby creating more traffic between the end user and content distributors.

## Claims

1. A computer implemented method for optimization of traffic distribution between content providers and content consumers while providing digital content over a digital data network including:
providing a first computer resource (20) comprising a media content generating system configured to generate media content for an at least one second computer resource (11, 12, 13), said first and second computer resources being adapted and configured to communicate with each other at least temporarily via a network, and wherein said second computer resource is operated by an end user;
determining, in the first computer resource (20), technical parameters and/or the end user parameters of the second computer resource (11, 12, 13);
determining subset of media content entities for which the technical parameters and/or end user parameters satisfy selection criteria for the second computer resource (11, 12, 13) and
the end user;
ranking media content based upon a probability that content is relevant to the end user;
selecting a highest ranked media content entity and dynamically formatting said media content in accordance with said determined parameters of the second computer resource (11, 12, 13) and preferences of the end user,
embedding said selected media content entity into said dynamic content plugin; and
providing said selected media content entity embedded into a dynamic plugin to said second computer resource (11, 12, 13).

2. The method of claim 1 further comprising a content predictive formatting adapted to
(a1) retrieve from the second computer resource (11, 12, 13) as technical parameters data regarding at least a supported language, device type, device model, device manufacturer, operation system and version of the operation system of said second computer resource, User Agent and IP address to make the request from the second to the first computer resource for the media content with such end user parameters; and/or
(a2) retrieve from the second computer resource (11, 12, 13) as end-user information data regarding browser cookies, software usage, browsing history, geographical user location, IP address;
(b) create a behavioral user profile based on the retrieved information; and
(c) select dynamic content for the dynamic content plugin based upon the behavioral user profile.

3. The method of claim 1 or 2, further including a Traffic Distribution System (17), TDS, which redirects clicks of a non-target user to the media content for which such a non-target user will be target audience, wherein the end user is determined to be non-target user if determined parameters of the end user do not satisfy conditions set forth for the media content.

4. The method of claim 1 or 2, further including tracking user activity relative to each media content entity loaded to the second computer resource (11, 12, 13), including validating end user actions and communicating said validation results to the database (19) for further processing.

5. The method of any of claims 1 to 4 for accessing a web site from the second computer resource (11, 12, 13) further comprising;
determining access parameters such as operation system of the second computer resource (11, 12, 13), connection parameters such as network type (WLan, LTE, 3G, EDGE, or the like), geographical location, a browser software, device make and model; and/or
parsing collected content data fields to determine properties of the second computer resource (11, 12, 13), including various parameters of the device, the operation system type, manufacturer, version, the type of the device itself (i.e. phone, tablet, notebook etc.), the manufacturer of the device and device model;
identifying a unique user ID of the end user, if such user has accessed DCP before if a user record with the end user ID already exists in the database (19), then the information is appended to the identified user record in the database (19), or creating a new user record in the database (19) and appending the information to the user record, and
providing the initial media content to the end user based upon information retrieved from the parsing.

6. The method of any of claims 1 to 5 for accessing a web site from the second computer resource (11, 12, 13) further comprising:
appending the database (19) user record each time there is any interaction of the end user with DCP with information related to said interaction, including at least one of a click,
viewing of a media content proceeding to a link, downloading data or a computer program.

7. The method of any of claims 1 to 6, wherein an event of interaction, such as click is set to a valid or an invalid state, wherein, if the end user is not identified as a valid user, or a click is not identified as a valid click, the event will be recorded as invalid, and if the event is determined to be invalid, the TDS (17) will be engaged.

8. The method of any of claims 1 to 6, wherein at the first computer resource (20), available information on prior interaction events of the end user are retrieved from the database and analyzed, and at each interaction event user preferences and statistical information related to the second computer resource (11, 12, 13) and the end user are generated, and statistics in the database (19) for the determined end user are created or updated.

9. The method of any of claims 1 to 8, wherein it is determined that media content entity that has been clicked and viewed the most by the end user, considering only valid clicks and actions, and wherein the most relevant content entity for the end user is identified, new content entity is offered to the end user based upon content characteristics including: Color scheme, Size, Language, Animation, Genre of content, Arrangement of the elements, Ratings, Images, Banner position, Banner format, and wherein determined user preferences are being used to predictively format the content for a given end user in response to the determined end user preferences for said end user by a list of content entities available for the second computer resource based upon the determined user parameters and based upon the probability that the user will click at each of the selected content entities.

10. The method of any of claims 1 to 9, wherein the content entity with a highest weight is selected and sent to a Media Content Generator for generating content for the determined content entity including the following elements: a graphical icon for the application, rating of the application, name of the application, description, cost indication, application banners for display, etc, and wherein the elements are selected and content is generated and predictively formatted by the Media Content Generator (18) in accordance with the determined user preferences.

11. The method of any of claims 1 to 10, wherein the generated and predictively formatted content is being sent to the DCP and displayed to the end user, and wherein each event of user interaction with the content provided by DCP is being detected, validated and recorded, and, if an event of interaction with the content is detected, the DCP sends a notification to the first computer resource (20).

12. A system (10) for optimization of traffic distribution between content providers and content consumers while providing digital content over a digital data network including:
a first computer resource (20) comprising a media content generating system configured to generate media content for an at least one second computer resource (11, 12, 13), said first and second computer resources being adapted and configured to communicate with each other at least temporarily via a network, and wherein said second computer resource (11, 12, 13) is operated by an end user;
wherein said first computer resource (20) adapted to:
determine technical parameters and/or the end user parameters of the second computer resource (11, 12, 13);
determine subset of media content entities for which the technical parameters and/or end user parameters satisfy selection criteria for the second computer resource (11, 12, 13) and
the end user;
rank media content based upon a probability that content is relevant to the end user;
select a highest ranked media content entity and dynamically format said media content in accordance with said determined parameters of the second computer resource and
preferences of the end user,
embed said selected media content entity into said dynamic content plugin; and
provide said selected media content entity embedded into a dynamic plugin to said second computer resource (11, 12, 13).
